# EUROPEAN PATENT SPECIFICATION

(11) **EP 3 464 879 B1**
(45) Date of publication and mention of the grant of the patent: **29.04.2020**
(21) Application number: 17724022.3
(22) Date of filing: 16.05.2017
(51) Int. Cl.: B63B 21/50, F03B 13/26

(54) **DEPLOYING SUBMERGED EQUIPMENT**
EINSATZ EINER UNTERGETAUCHTEN AUSRÜSTUNG
DÉPLOIEMENT D'UN ÉQUIPEMENT IMMERGÉ

(30) Priority: 26.05.2016 GB 201609302
(43) Date of publication of application: 10.04.2019
(73) Proprietor: Tidal Generation Limited, London, W6 8BJ (GB)
(72) Inventor: VERDEGUER, Javier, Bristol Gloucestershire BS1 3AG (GB)
(74) Representative: Openshaw & Co.
(86) International application number: PCT/EP2017/061767
(87) International publication number: WO 2017/202653

(56) References cited:
- GB-A- 2 431 628
- GB-A- 2 486 697
- GB-A- 2 515 011

## Description

The present invention relates to deploying submerged equipment, particularly to deploying power generating devices and associated equipment.

### BACKGROUND OF THE INVENTION

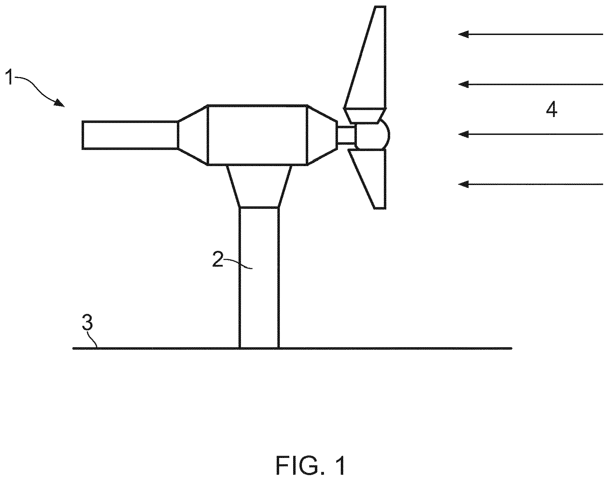

Deploying and retrieving submerged equipment can be difficult and hazardous, as well as costly. In particular, submerged power generating devices, such as that illustrated in Figure 1 of the accompanying drawings, require maintenance that can only be carried out with the device removed from the water. The power generating system of Figure 1 comprises a power generating device 1 mounted on a support structure 2 located on a bed 3 of a body of water. The power generating device 1 shown in Figure 1 is exemplary and is a water current turbine device that includes a rotor assembly that is driven by a water current flow 4. The rotor assembly drives a power generator housed in the device, thereby enabling the production of power from the water current. Most typically, this power is in the form of electricity, but it is conceivable that the power generator may produce hydraulic, pneumatic or other power. Such a power generating device may be installed in any appropriate body of water, such as a tidal region, and ocean, or a river.

One proposed design to simplify the maintenance of such power generating systems is to make the power generating device 1 detachable from the support structure 2. In addition, it has been proposed to make the power generating device 1 buoyant, such that it is able to float to the surface of the body of water when being retrieved. This buoyancy enables recovery of the device to be accomplished quickly and without the need for sea-borne heavy lifting equipment.

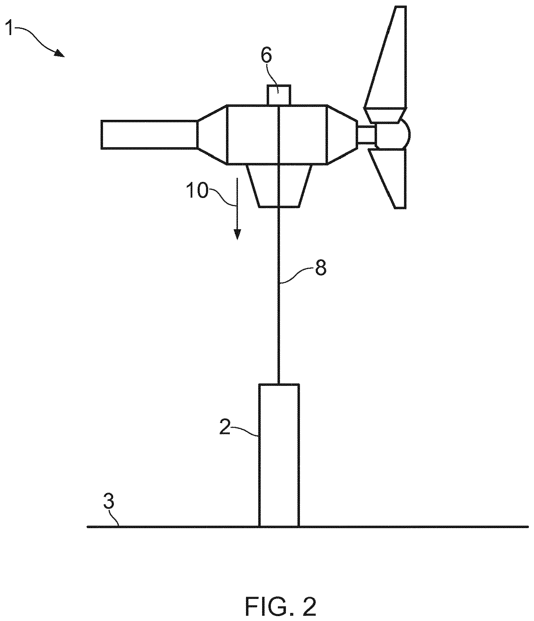

In order to deploy a buoyant power generating device 1 onto the support structure 2, it has been proposed to use a winch-based technique. Such a technique is described, for example, in UK Patent No. 2486697, and is illustrated in Figure 2 of the accompanying drawings. The power generating device 1 in Figure 2 is shown detached from the support structure. A winch device 6 is mounted on the power generating device 1, and has a winch tether 8 which extends from the winch device 6 to the support structure 2. The winch tether 8 is attached to the support structure 2 such that as the winch device 6 operates to wind in the winch tether 8, the power generating device 1 is pulled towards the support structure 2, as illustrated by arrow 10. The buoyant nature of the power generating device 1 keeps the winch tether taught during the deployment operation. The winch device 6 operates until the power generating device 1 is engaged with the support structure 2 (as shown in Figure 1).

In order to reduce costs, it is desirable to be able to retrieve the winch device 6 for use in deployment of another device 1. It is, therefore, desirable to provide a method and apparatus that enables both the deployment of the power generating device 1 and the recovery of the winch device 6 to be achieved efficiently.

GB2515011 (A) discloses a system for attaching power generating equipment such as a tidal turbine to a support structure. GB2486697 (A) is directed to deploying and retrieving submerged power generating equipment. GB2431628 (A) discloses a submersible winching device is mounted on a positively buoyant power generating apparatus for the purposes of deploying said power generating apparatus onto a submerged support structure.

### SUMMARY OF THE INVENTION

The invention is defined by the appended claims. In the following, apparatus and/or methods referred to as embodiments that nevertheless do not fall within the scope of the claims should be understood as examples useful for understanding the invention.

According to one aspect of the present invention, there is provided a system for deploying buoyant equipment onto a support structure located on a bed of a body of water as claimed in claim 1.

According to a second aspect of the invention, there is provided a method of deploying buoyant equipment onto a support structure located on a bed of a body of water as claimed in claim 8.

### BRIEF DESCRIPTION OF THE DRAWINGS

Figure 1 is a schematic view of a submerged power generating system;
Figure 2 illustrates deployment of the system of Figure 1;
Figure 3 illustrates deployment of a submerged device according to the principles of the present invention;
Figure 4 illustrates a coupling device embodying another aspect of the present invention; and
Figures 5 to 7 illustrate use of the coupling device of Figure 4.

### DETAILED DESCRIPTION OF THE PREFERRED EMBODIMENTS

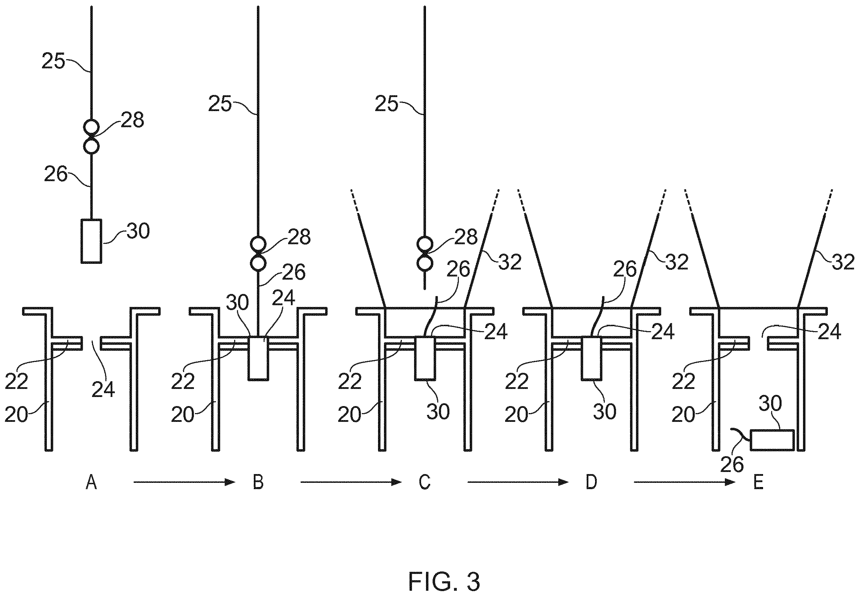

Figure 3 illustrates a deployment method embodying one aspect of the present invention. The method includes five steps, indicated by the five representations A to E of Figure 3. A top portion 20 of the support structure is shown in Figure 3. The top portion 20 includes an engagement plate 22 which is attached to the top portion of the support structure. It will be appreciated that the engagement plate 22 may be attached to any suitable part of the support structure. The engagement plate 22 defines an engagement aperture 24 therethrough.

A winch tether is extended from the winch device of the equipment being deployed. The winch tether in this example includes a main portion 25, a detachable portion 26 and a connector 28 which connects the main and detachable portions 25 and 26. The connector 28 is optional and the tether may be provided by a single portion. A coupling device 30 is attached to the tether at a distal end thereof.

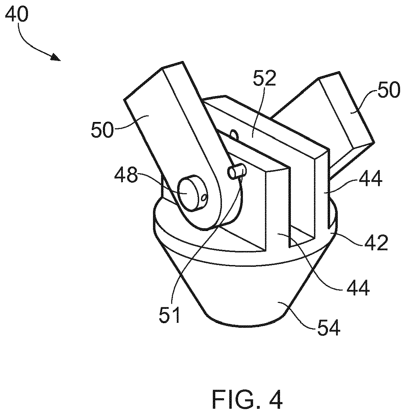

As shown in step B, the coupling device 30 is engaged with the engagement plate 22, by passing the coupling device 30 through the engagement aperture 24 of the plate 22. One example coupling device 30 suitable for engaging with the engagement plate 22 in this manner will be described below with reference to Figures 4 to 7.

Engagement of the coupling device 30 with the engagement plate 22 allows the winch device to winch in the tether 25, thereby pulling the power generating device down towards the support structure Step B shows the tether being used in this manner. The tension in the tether, caused by virtue of the buoyancy of the power generating device being deployed, serves to keep the coupling device 30 engaged with the engagement plate 22. Such engagement can be considered "passive" in the sense that it is the action of pulling the winch tether that maintains the engagement of the coupling device 30 with the engagement plate 22.

Step C shows the position when a lower part 32 of the power generating device engages with the top portion 20 of the support structure. In this position, the detachable portion 26 of the tether is cut to enable the tether to be disconnected from the support structure. This enables the winch device to be removed from the power generating device and recovered to the surface. The connector 28 allows a replacement detachable tether portion 26 to be attached to the main portion 25 of the tether.

Step D shows the position when the winch and main portion of tether has been removed. The detachable portion 26 of the tether is no longer in tension, and so the coupling device 30 is able to disengage from the engagement plate 22. The coupling device 30 and the piece of the detachable portion 26 of the tether that is connected with the coupling device 30 falls into a reception region of the support structure.

In such a manner, the retrieval of the winch device, and most of the tether is achievable without complex subsea operations. In addition, the attachment of the winch tether to the support structure is simplified.

Figure 4 illustrates a coupling device 40 suitable for use in the manner described above. The coupling device 40 comprises a body having a substantially flat plate 42, from a first surface of which first and second upstands 44 and 46 extend, substantially perpendicular to the plate 42. The upstands 44,46 extend along the plate 42, and are spaced apart from one another. A tether engagement portion 52 extends between the first and second upstands 44 and 46. The winch tether is attached to the tether engagement portion 52.

Each upstand 44, 46 has a support portion 48 extending therefrom. Each support portion 48 extends substantially parallel to the plate 42, and supports a locking portion 50. The locking portion 50 is mounted on the support portion 48 and is rotatable about the support portion 48. Rotation of the locking portion 50 is limited by a protrusion 51 that extends from the upstand 44, 46.

A truncated cone shaped locating portion 54 extends from the plate 42, from a side opposite to that from which the upstands extend. The locating portion 54 serves to centre the coupling device 40 when it comes into engagement with the engagement aperture 24 of the engagement plate 22 of the support structure.

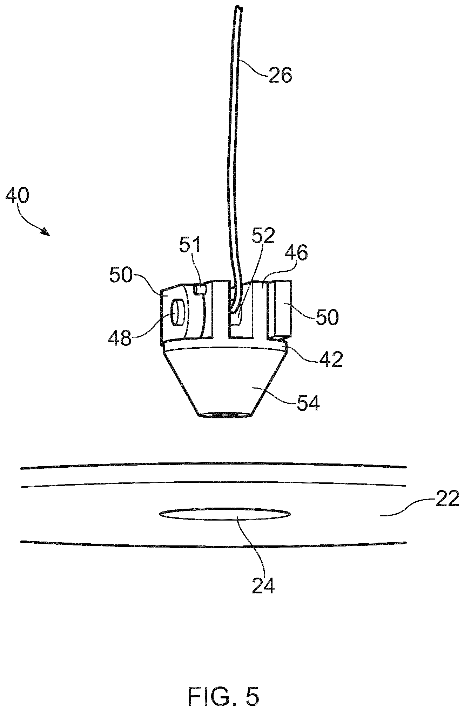

Use of the coupling device 40 of Figure 4 will now be described with reference to Figures 5 to 7. In Figure 5, the coupling device 40 is attached to the winch tether 26 and is being lowered towards the engagement plate 22 of the support structure. In this position, the locking portions 50 are in a transit position in which each locking portion extends adjacent the upper surface of the plate 42. Each locking portion 50 extends such that an end region of the locking portion overhangs the plate 42. The locking portions 50 are held in the transit position by the action of gravity.

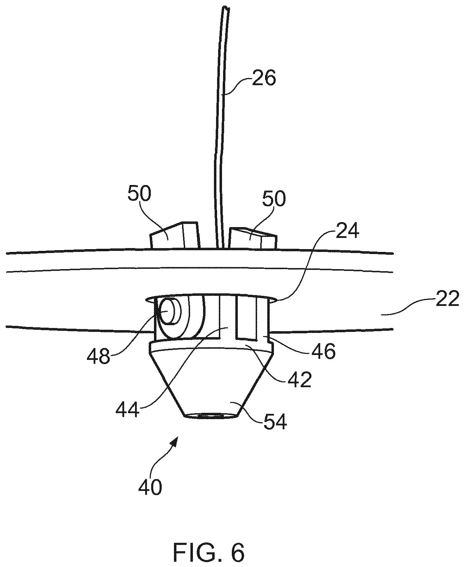

Figure 6 shows the coupling device 40 partially inserted through the engagement aperture 24 of the engagement plate 22. As the locating portion 54 engages and outer edge of the engagement aperture 24, the coupling device 40 is centred in the aperture 24. The coupling device 40 is further lowered into the aperture 24, such that the end regions of the locking portions 50 engage with respective edge regions of the engagement aperture 24. Further downward movement of the coupling device 40 causes the locking portions 50 to rotate with respect to the respective support portions 48 such that the coupling device is able to pass through the aperture 24. The protrusions 51 prevent the locking portions over rotating, and ensure that the locking portions 50 return to the correct position.

When the coupling device 40 has passed through the aperture 24, the action of gravity causes the locking portions 50 to rotate with respect to the support portions 48 back to the transit position. In this position, the coupling device 40 cannot be pulled back through the aperture 24, since the locking portions 50 extend outside of the plate 42, and of the aperture 24.

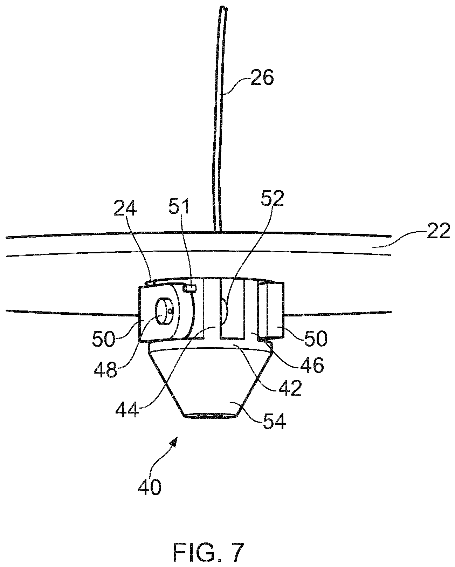

The winch can now wind in the tether, which causes the coupling device 40, and the locking portions 50 in particular, to engage with the engagement plate 22, as shown in Figure 7. The winch can, therefore, pull the power generating device towards the support structure against the engagement of the coupling device 40 with the engagement plate 24.

Following location of the power generating device on the support structure, the tether portion 26 can be detached, preferably by cutting, from the main tether portion. This releases the tension in the tether portion 26, such that the coupling device falls under the action of gravity into a reception region of the support structure.

Such a coupling device provides a straightforward technique for engaging the winch tether with the support structure by making use of passive engagement, enabled by the tension in the tether during movement of the power generating device, and by the action of gravity of the locking portions.

The aforementioned is not intended to be limiting with respect to the scope of the appended claims, which follow. It is also contemplated by the inventors that various substitutions, alterations, and modifications may be made to the invention without departing from the scope of the invention as defined by the claims.

## Claims

1. A system for deploying buoyant equipment onto a support structure located on a bed of a body of water, the support structure having a support surface for receiving such equipment, and an engagement portion having a circular engagement aperture having a diameter, the system comprising:
a winch device adapted for releasable mounting on such equipment, the winch device having a winch tether (26) that extends therefrom, and being operable to pay out and to winch in the winch tether (26), and
a coupling device (40) attached to a distal end of the winch tether (26) for releasable engagement with an engagement portion of such a support structure,
wherein the coupling device (40) has a first position in which the coupling device (40) has an outer dimension greater than the diameter of such engagement aperture of the support structure, and a second position in which the coupling device (40) has a maximum outer dimension less than the diameter of the engagement aperture of the support structure, the coupling device (40) comprising:
a circular body portion having an upper surface, and having a diameter smaller than that of the engagement aperture;
a tether engagement portion (52) attached to the body portion, the tether engagement portion (52) being attached to the distal end of the winch tether (26); **characterised by**
a locking portion (50), rotatably attached to the body portion, and having a first position in which the locking portion (50) extends substantially parallel to and adjacent the upper surface of the body portion, and a second position in which the locking portion (50) extends away from the upper surface of the body portion in the direction of the winch tether (26),
wherein, in the first position, the locking portion (50) overhangs an outer edge of the body portion such that the coupling device (40) has an outer dimension greater than the diameter of the engagement aperture of the support structure, and wherein, in the second position, the coupling device (40) has a maximum outer dimension less than the diameter of the engagement aperture of the support structure.

2. A system as claimed in claim 1, wherein, in the second position, the coupling device (40) is able to pass through the engagement aperture.

3. A system as claimed in claim 1, wherein the locking portion (50) is freely rotatable with respect to the body portion.

4. A system as claimed in claim 1, wherein, during deployment of the equipment, the coupling device (40) is inserted through the engagement aperture, the action of passing through the aperture causing the coupling device (40) to move from the first position to the second position by virtue of the locking portion (50) being in contact with an edge of the aperture, the coupling device (40) returning to the first position through the action of gravity once the coupling device (40) has passed through the aperture.

5. A system as claimed in claim 1, wherein the coupling device (40) comprises a second such locking portion.

6. A system as claimed in any one of the preceding claims, wherein the buoyant equipment is a power generating unit.

7. A system as claimed in claim 6, wherein the power generating unit is a water current turbine power generating unit.

8. A method of deploying buoyant equipment onto a support structure located on a bed of a body of water, the support structure having a support surface for receiving such equipment, and an engagement portion having a circular engagement aperture having a diameter, the method comprising:
attaching a winch device to such equipment, the winch device having a winch tether (26) that extends therefrom, and being operable to pay out and to winch in the winch tether (26);
attaching a coupling device (40) to a distal end of the winch tether (26) for releasable engagement with the engagement portion of such a support structure, the coupling device (40) having a first position in which the coupling device (40) has an outer dimension greater than the diameter of such engagement aperture of the support structure, and a second position in which the coupling device (40) has a maximum outer dimension less than the diameter of the engagement aperture of the support structure, the coupling device (40) comprising:
a circular body portion having an upper surface, and having a diameter smaller than that of the engagement aperture;
a tether engagement portion (52) attached to the body portion, the tether engagement portion (52) being attached to the distal end of the winch tether (26); and
a locking portion (50), rotatably attached to the body portion, and having a first position in which the locking portion (50) extends substantially parallel to and adjacent the upper surface of the body portion, and a second position in which the locking portion (50) extends away from the upper surface of the body portion in the direction of the winch tether (26),
wherein, in the first position, the locking portion (50) overhangs an outer edge of the body portion such that the coupling device (40) has an outer dimension greater than the diameter of the engagement aperture of the support structure, and wherein, in the second position, the coupling device (40) has a maximum outer dimension less than the diameter of the engagement aperture of the support structure; the method further comprising:
passing the coupling device (40) through the engagement aperture of the support structure, the action of passing through the aperture causing the coupling device (40) to move from the first position to the second position by virtue of the locking portion (50) being in contact with an edge of the aperture, the coupling device (40) returning to the first position through the action of gravity once the coupling device (40) has passed through the aperture,
winching in the winch tether (26), thereby engaging the coupling device (40) with an edge region of the engagement aperture and pulling the equipment into engagement with the support structure;
securing the equipment onto the support structure; and
disconnecting the coupling device (40) from the winch tether (26).

## Patentansprüche

1. System zum Ausfahren einer schwimmfähigen Ausrüstung auf einer Stützstruktur, die sich auf einem Grund eines Gewässers befindet, wobei die Stützstruktur eine Stützoberfläche zum Aufnehmen einer derartigen Ausrüstung und einen Eingriffsabschnitt mit einer kreisförmigen Eingriffsöffnung mit einem Durchmesser aufweist, wobei das System Folgendes umfasst:
eine Windenvorrichtung, die zum lösbaren Aufbauen auf eine derartige Ausrüstung geeignet ist, wobei die Windenvorrichtung ein Windenkabel (26) aufweist, das sich davon erstreckt, und das betriebsfähig ist, ablaufen gelassen zu werden und in das Windenkabel (26) zu winden, und eine Kopplungsvorrichtung (40), die an einem distalen Ende des Windenkabels (26) für einen lösbaren Eingriff mit einem Eingriffsabschnitt einer derartigen Stützstruktur angebracht ist, wobei die Kopplungsvorrichtung (40) eine erste Position aufweist, in der die Kopplungsvorrichtung (40) eine äußere Abmessung aufweist, die größer als der Durchmesser einer solchen Eingriffsöffnung der Stützstruktur ist, und eine zweite Position, in der die Kopplungsvorrichtung (40) eine maximale äußere Abmessung aufweist, die kleiner als der Durchmesser der Eingriffsöffnung der Stützstruktur ist, wobei die Kopplungsvorrichtung (40) Folgendes umfasst:
einen kreisförmigen Körperabschnitt mit einer oberen Oberfläche und einem Durchmesser, der kleiner als der der Eingriffsöffnung ist;
einen an dem Körperteil befestigten Kabeleingriffsabschnitt (52), wobei der Kabeleingriffsabschnitt (52) an dem distalen Ende des Windenkabels (26) befestigt ist;
**gekennzeichnet durch** einen Verriegelungsabschnitt (50), der drehbar an dem Körperabschnitt befestigt ist und eine erste Position aufweist, in der sich der Verriegelungsabschnitt (50) im Wesentlichen parallel zu und angrenzend an die obere Oberfläche des Körperabschnitts erstreckt, und eine zweite Position, in der sich der Verriegelungsabschnitt (50) von der oberen Oberfläche des Körperabschnitts in Richtung des Windenkabels (26) weg erstreckt, wobei, in der ersten Position, der Verriegelungsabschnitt (50) eine äußere Kante des Körperabschnitts derart überragt, dass die Kopplungsvorrichtung (40) eine äußere Abmessung hat, die größer als der Durchmesser der Eingriffsöffnung der Stützstruktur ist, und wobei in der zweiten Position die Kopplungsvorrichtung (40) eine maximale äußere Abmessung hat, die kleiner als der Durchmesser der Eingriffsöffnung der Stützstruktur ist.

2. System nach Anspruch 1, wobei, in der zweiten Position, die Kopplungsvorrichtung (40) in der Lage ist, durch die Eingriffsöffnung zu gehen.

3. System nach Anspruch 1, wobei der Verriegelungsabschnitt (50) mit Bezug auf den Körperabschnitt frei drehbar ist.

4. System nach Anspruch 1, wobei, während des Ausfahrens der Ausrüstung, die Kopplungsvorrichtung (40) durch die Eingriffsöffnung eingeführt wird, wobei der Vorgang des Durchgehens durch die Öffnung bewirkt, dass sich die Kopplungsvorrichtung (40) von der ersten Position in die zweite Position bewegt, da der Verriegelungsabschnitt (50) in Kontakt mit einer Kante der Öffnung ist, wobei die Kopplungsvorrichtung (40) durch die Wirkung der Schwerkraft in die erste Position zurückkehrt, sobald die Kopplungsvorrichtung (40) durch die Öffnung gegangen ist.

5. System nach Anspruch 1, wobei die Koppplungsvorrichtung (40) einen zweiten derartigen Verriegelungsabschnitt umfasst.

6. System nach einem der vorhergehenden Ansprüche, wobei die schwimmfähige Ausrüstung eine Stromerzeugungseinheit ist.

7. System nach Anspruch 6, wobei die Stromerzeugungseinheit eine Stromerzeugungseinheit für Wasserströmungsturbinen ist.

8. Verfahren zum Ausfahren einer schwimmfähigen Ausrüstung auf einer Stützstruktur, die sich auf einem Grund eines Gewässers befindet, wobei die Stützstruktur eine Stützoberfläche zum Aufnehmen einer derartigen Ausrüstung und einen Eingriffsabschnitt mit einer kreisförmigen Eingriffsöffnung mit einem Durchmesser aufweist, wobei das Verfahren Folgendes umfasst:
Befestigen einer Windenvorrichtung an einer derartigen Ausrüstung, wobei die Windenvorrichtung ein Windenkabel (26) aufweist, das sich davon erstreckt, und betriebsfähig ist, um ablaufen gelassen zu werden und in dem Windenkabel (26) zu winden;
Befestigen einer Kopplungsvorrichtung (40) an einem distalen Ende des Windenkabels (26) zum lösbaren Eingriff mit dem Eingriffsabschnitt einer derartigen Stützstruktur, wobei die Kopplungsvorrichtung (40) eine erste Position aufweist, in der die Kopplungsvorrichtung (40) eine äußere Abmessung aufweist, die größer als der Durchmesser einer solchen Eingriffsöffnung der Stützstruktur ist, und eine zweite Position, in der die Kopplungsvorrichtung (40) eine maximale äußere Abmessung aufweist, die kleiner als der Durchmesser der Eingriffsöffnung der Stützstruktur ist, wobei die Kopplungsvorrichtung (40) Folgendes umfasst:
einen kreisförmigen Körperabschnitt mit einer oberen Oberfläche und einem Durchmesser, der kleiner als der der Eingriffsöffnung ist;
einen an dem Körperteil befestigten Kabeleingriffsabschnitt (52), wobei der Kabeleingriffsabschnitt (52) an dem distalen Ende des Windenkabels (26) befestigt ist; und
einen Verriegelungsabschnitt (50), der drehbar an dem Körperabschnitt angebracht ist und eine erste Position aufweist, in der sich der Verriegelungsabschnitt (50) im Wesentlichen parallel zu und angrenzend an der oberen Oberfläche des Körperabschnitts erstreckt, und eine zweite Position, in der sich der Verriegelungsabschnitt (50) sich von der oberen Oberfläche des Körperabschnitts in Richtung des Windenkabels (26) weg erstreckt,
wobei, in der ersten Position, der Verriegelungsabschnitt (50) eine äußere Kante des Körperabschnitts derart überragt, dass die Kopplungsvorrichtung (40) eine äußere Abmessung aufweist, die größer als der Durchmesser der Eingriffsöffnung der Stützstruktur ist, und wobei in der zweiten Position die Kopplungsvorrichtung (40) eine maximale Außenabmessung hat, die kleiner als der Durchmesser der Eingriffsöffnung der Stützstruktur ist; wobei das Verfahren ferner Folgendes umfasst:
Gehen der Kopplungsvorrichtung (40) durch die Eingriffsöffnung der Stützstruktur, wobei der Vorgang des Durchgehens durch die Öffnung bewirkt, dass sich die Kopplungsvorrichtung (40) aufgrund des Verriegelungsabschnitts (50) von der ersten Position in die zweite Position bewegt, in Kontakt mit einem Rand der Öffnung kehrt die Kopplungsvorrichtung (40) durch den Vorgang der Schwerkraft in die erste Position zurück, sobald die Kopplungsvorrichtung (40) durch die Öffnung gegangen ist,
wobei sie in dem Windenkabel (26) gewindet wird, wobei dadurch die Kopplungsvorrichtung (40) mit einem Kantenbereich der Eingriffsöffnung in Eingriff genommen wird und die Ausrüstung in Eingriff mit der Stützstruktur gezogen wird;
Sichern der Ausrüstung an der Stützstruktur; und
Trennen der Kopplungsvorrichtung (40) von dem Windenkabel (26).

## Revendications

1. Système pour déployer un équipement flottant sur une structure de support située sur un lit d'une masse d'eau, la structure de support ayant une surface de support pour recevoir un tel équipement, et une partie de mise en prise ayant une ouverture de mise en prise circulaire ayant un diamètre, le système comprenant :
un dispositif de treuil apte à être monté de manière amovible sur un tel équipement, le dispositif de treuil ayant un câble de treuil (26) qui s'étend à partir de celui-ci, et pouvant être actionné pour filer et remonter le câble de treuil (26), et
un dispositif d'accouplement (40) attaché à une extrémité distale du câble de treuil (26) pour une mise en prise amovible avec une partie de mise en prise d'une telle structure de support,
dans lequel le dispositif d'accouplement (40) a une première position dans laquelle le dispositif d'accouplement (40) a une dimension extérieure supérieure au diamètre d'une telle ouverture de mise en prise de la structure de support, et une seconde position dans laquelle le dispositif d'accouplement (40) a une dimension extérieure maximale inférieure au diamètre de l'ouverture de mise en prise de la structure de support, le dispositif d'accouplement (40) comprenant :
une partie de corps circulaire ayant une surface supérieure, et ayant un diamètre inférieur à celui de l'ouverture de mise en prise ;
une partie de mise en prise de câble (52) attachée à la partie de corps, la partie de mise en prise de câble (52) étant attachée à l'extrémité distale du câble de treuil (26) ;
**caractérisé par**
une partie de verrouillage (50), attachée de manière rotative à la partie de corps, et ayant une première position dans laquelle la partie de verrouillage (50) s'étend de manière sensiblement parallèle et adjacente à la surface supérieure de la partie de corps, et une seconde position dans laquelle la partie de verrouillage (50) s'étend de manière à s'écarter de la surface supérieure de la partie de corps dans la direction du câble de treuil (26),
dans lequel, dans la première position, la partie de verrouillage (50) surplombe un bord extérieur de la partie de corps de telle sorte que le dispositif d'accouplement (40) a une dimension extérieure supérieure au diamètre de l'ouverture de mise en prise de la structure de support, et dans lequel, dans la seconde position, le dispositif d'accouplement (40) a une dimension extérieure maximale inférieure au diamètre de l'ouverture de mise en prise de la structure de support.

2. Système selon la revendication 1, dans lequel, dans la seconde position, le dispositif d'accouplement (40) est capable de traverser l'ouverture de mise en prise.

3. Système selon la revendication 1, dans lequel la partie de verrouillage (50) peut tourner librement par rapport à la partie de corps.

4. Système selon la revendication 1, dans lequel, lors du déploiement de l'équipement, le dispositif d'accouplement (40) est inséré à travers l'ouverture de mise en prise, l'action de traverser l'ouverture amenant le dispositif d'accouplement (40) à se déplacer de la première position à la seconde position du fait que la partie de verrouillage (50) est en contact avec un bord de l'ouverture, le dispositif d'accouplement (40) revenant à la première position par l'action de la pesanteur une fois que le dispositif d'accouplement (40) a traversé l'ouverture.

5. Système selon la revendication 1, dans lequel le dispositif d'accouplement (40) comprend une seconde partie de verrouillage de ce type.

6. Système selon l'une quelconque des revendications précédentes, dans lequel l'équipement flottant est un groupe électrogène.

7. Système selon la revendication 6, **caractérisé en ce que** le groupe électrogène est un groupe électrogène à turbine à courant d'eau.

8. Procédé de déploiement d'un équipement flottant sur une structure de support située sur un lit d'une masse d'eau, la structure de support ayant une surface de support servant à recevoir un tel équipement, et une partie de mise en prise ayant une ouverture de mise en prise circulaire ayant un diamètre, le procédé comprenant :
l'attachement d'un dispositif de treuil à un tel équipement, le dispositif de treuil ayant un câble de treuil (26) qui s'étend à partir de celui-ci, et pouvant être actionné pour filer et remonter le câble de treuil (26) ;
l'attachement d'un dispositif d'accouplement (40) à une extrémité distale du câble de treuil (26) pour une mise en prise amovible avec la partie de mise en prise d'une telle structure de support, le dispositif d'accouplement (40) ayant une première position dans laquelle le dispositif d'accouplement (40) a une dimension extérieure supérieure au diamètre d'une telle ouverture de mise en prise de la structure de support, et une seconde position dans laquelle le dispositif d'accouplement (40) a une dimension extérieure maximale inférieure au diamètre de l'ouverture de la mise en prise de la structure de support, le dispositif d'accouplement (40) comprenant :
une partie de corps circulaire ayant une surface supérieure, et ayant un diamètre inférieur à celui de l'ouverture de mise en prise ;
une partie de mise en prise de câble (52) attachée à la partie de corps, la partie de mise en prise de câble (52) étant attachée à l'extrémité distale du câble de treuil (26) ; et
une partie de verrouillage (50), attachée de manière rotative à la partie de corps, et ayant une première position dans laquelle la partie de verrouillage (50) s'étend de manière sensiblement parallèle et adjacente à la surface supérieure de la partie de corps, et une seconde position dans laquelle la partie de verrouillage (50) s'étend de manière à s'écarter de la surface supérieure de la partie de corps dans la direction du câble de treuil (26),
dans lequel, dans la première position, la partie de verrouillage (50) surplombe un bord extérieur de la partie de corps de telle sorte que le dispositif d'accouplement (40) a une dimension extérieure supérieure au diamètre de l'ouverture de mise en prise de la structure de support, et dans lequel, dans la seconde position, le dispositif d'accouplement (40) a une dimension extérieure maximale inférieure au diamètre de l'ouverture de mise en prise de la structure de support ; le procédé comprenant en outre :
la traversée par le dispositif d'accouplement (40) de l'ouverture de mise en prise de la structure de support, l'action de traverser l'ouverture amenant le dispositif d'accouplement (40) à se déplacer de la première position à la seconde position du fait que la partie de verrouillage (50) est en contact avec un bord de l'ouverture, le dispositif d'accouplement (40) revenant à la première position par l'action de la pesanteur une fois que le dispositif d'accouplement (40) a traversé l'ouverture,
le remontage du câble de treuil (26), mettant ainsi en prise le dispositif d'accouplement (40) avec une région de bord de l'ouverture de mise en prise et tirant l'équipement de manière à ce qu'il vienne en prise avec la structure de support ;
la fixation de l'équipement sur la structure de support ; et
la séparation du dispositif d'accouplement (40) du câble de treuil (26).
